# EUROPEAN PATENT SPECIFICATION

(11) **EP 1 647 435 B1**
(45) Date of publication and mention of the grant of the patent: **10.06.2009**
(21) Application number: 05022517.6
(22) Date of filing: 14.10.2005
(51) Int. Cl.: B60K 28/00, B60K 26/02, F02D 11/02

(54) **Position detection device for an astride riding type vehicle**
Positionsgeber für ein Zweiradfahrzeug
Detecteur de position pour un véhicule à deux roues

(30) Priority: 14.10.2004 JP 2004299520
(43) Date of publication of application: 19.04.2006
(73) Proprietor: Yamaha Hatsudoki Kabushiki Kaisha, Iwata-shi, Shizuoka-ken (JP)
(72) Inventor: Hino, Haruyoshi, Iwata-shi Shizuoka-ken (JP); Murota, Keiko, Iwata-shi Shizuoka-ken (JP); Shirazawa, Hideki, Iwata-shi Shizuoka-ken (JP); Terada, Junji, Iwata-shi Shizuoka-ken (JP); Ono, Tomohiro, Iwata-shi Shizuoka-ken (JP)
(74) Representative: Grünecker, Kinkeldey, Stockmair & Schwanhäusser Anwaltssozietät

(56) References cited:
- EP-A- 1 154 346
- EP-A- 1 217 493
- EP-A- 1 365 128
- US-A1- 2003 129 886
- US-A1- 2004 099 080

## Description

The present invention relates to a position detection device, and in particular to a relative position detection device capable of detecting a relative position of a first member and a second member that are disposed for relative displacement to each other. Further, it also relates to an astride riding type vehicle in which such a position detection device is provided for the control of accelerator opening.

Hitherto, there have been proposed many systems in which a first and a second member are provided capable of relative displacement and the first and second members are displaced relative to each other so that an object to be controlled is controlled in response to the amount of displacement.

For example, in astride riding type vehicles using internal combustion engines, an accelerator grip is mounted on a handlebar for rotation and the accelerator is rotated with respect to the handlebar for the opening/closing control of a throttle valve of an internal combustion engine (engine).

In such astride riding type vehicles, an electric relative position detection-and-control device has been known in which the rotational operation of the accelerator is detected by a potentiometer and the throttle valve is opened/closed by an actuator based on the output voltage.

In the electric relative position detection-and-control device, in order to prevent an accident that the rotational operation of the accelerator does not correspond to the opening/closing movement of the throttle valve as a result of malfunction of the potentiometer or the like, besides the potentiometer, a mechanical completely-closed switch is provided capable of detecting a completely-closed position of the accelerator so as to close the throttle valve.

A system equipped with a magnetic relative position detection-and-control device has been known in which a magnet is disposed in an accelerator and the rotational position of the accelerator is detected using change in the magnetic flux density, and a system using a Hall IC has also been proposed.

For example, in JP-A-Hei 7-324637, for the purpose of detecting the rotational position of the accelerator to control ignition of the internal combustion engine, a magnet is fixed to the accelerator and two digital Hall ICs are fixed to a handle and it is judged in what range of idling, middle-speed and high-speed ranges the opening range of the accelerator is included.

Further, in Fig. 6 of JP-A-2002-256904 is disclosed a relative position detection device in which a permanent magnet is fixed to an accelerator and two Hall ICs having the same functions are fixed to a housing fastened to a handle shaft. Although details are not clear, this patent document discloses that an electric signal corresponding to the position of the permanent magnet during rotation of the accelerator is outputted and the amount of angular rotation of the accelerator by a manual operating section is detected, using two Hall ICs having the same functions.

However, since in a relative position detection device using a conventional potentiometer, the potentiometer is larger than an accelerator, external appearance is likely to become poorer if it is disposed around the accelerator. Therefore, it must be disposed at a position other than that around the accelerator and connected to the accelerator with a wire cable or the like, which is likely to increase the number of parts, human-hours required for an assembly process and the like. In addition, since a potentiometer larger than an accelerator is disposed, as well as a wire cable or the like, it is difficult to improve the quality of external appearance around the accelerator.

In addition, since in a conventional relative position detection device using magnetic properties, JP-A-2002-256904, for example, discloses that change in the magnetic flux passing through the space defined between a first stator and a second stator produced by the movement of the permanent magnet piece or the rotation of the rotor, is detected by a Hall IC to output an electric signal corresponding to the rotation angle of the rotor.

However, there is no specific description on the relation between change in the magnetic flux and the output of the electric signal and no reference is made on how to detect change of the relative position due to change in the magnetic flux over a longer range for the permanent magnet piece of a given length.

United States Patent Application Publication US 2004/0099080 discloses a magnetic speed controlling twist grip assembly including 2 magnets and according to the preamble of claim 1.

In view of the foregoing, an object of the present invention is to provide a position detection device, and in particular a relative position detection device, capable of detecting change of the relative position more effectively over a longer range and of being constructed compactly at a low cost.

This objective is solved in an inventive manner by a position detection device having a first member and a second member which are displaceable relative to each other, the first member comprising a magnet, and the second member comprising, in a range of a magnetic field of the magnet, a first Hall effect sensor for detecting a change in a property of the magnetic field, wherein a plate thickness of the magnet at its end face in a direction of a relative displacement of the first and second members is reduced.

Preferably, the magnet at its end face in the direction of the relative displacement has a slant face formed in such a manner that the plate thickness of the magnet becomes thinner toward it.

The above objective is likewise solved in an inventive manner by a position detection device having a first member and a second member which are displaceable relative to each other, the first member comprising a magnet, and the second member comprising, in a range of a magnetic field of the magnet, a first Hall effect sensor for detecting a change in a property of the magnetic field, wherein a magnetic substance is disposed at at least one of the end faces of the magnet in a direction of the relative displacement of the first and second members.

The above solutions to the objective of the present invention might even be applied commonly to form a preferred embodiment of the present position detection device.

According to a further preferred embodiment, the Hall effect sensor is configured to detect a change in a flux density, and wherein the Hall effect sensor is provided on the second member in a range in which the flux density of the magnetic field of the magnet changes monotonously.

According to another preferred embodiment, the position detection device comprises a magnetic metal plate disposed opposite and separate from the magnet, wherein the first Hall effect sensor is disposed between the metal plate and the magnet.

Another object of the present invention is to provide an astride riding type vehicle capable of improving the quality of external appearance around an accelerator.

This objective is solved in an inventive manner by an astride riding type vehicle having the position detection device, as indicated above, mounted thereon for the control of accelerator opening, wherein one of the magnet and the Hall effect sensor is fixed to a handlebar and the other to an accelerator grip mounted to the handlebar for rotation; and a rotational position of the handle grip with respect to the handlebar is detected by the relative position detection device.

In the following, the present invention is explained in greater detail with respect to several embodiments thereof in conjunction with the accompanying drawings, wherein:
- Fig. 1: is a plan view, partly in section, of a relative position detection device of a first embodiment, which is mounted to an accelerator;
- Fig. 2: is a sectional view, taken along line A-A of Fig. 1, of the relative position detection device of the first embodiment, which is mounted to the accelerator;
- Fig. 3: shows the accelerator of the first embodiment, in which (a) is a longitudinal sectional view and (b) is a sectional view taken along line B-B of (a);
- Fig. 4: is a perspective view of a split housing of the first embodiment;
- Fig. 5: is a plan view of a detection section of the first embodiment;
- Fig. 6: is a sectional view, showing the positional relation between the end portion of the accelerator and the detection section of the first embodiment; and
- Fig. 7: are graphs, showing changes in flux density and those of detection signals in a digital Hall IC and a linear Hall IC in the first embodiment, in which (a) shows change in flux density at the position of the digital Hall IC, (b) shows change of a first detection signal, (c) shows change in flux density at the position of the linear Hall IC, and (d) shows change of a second detection signal;
- Fig. 8: are illustrations, showing a permanent magnet and the flux density or the like of the relative position detection device of the first embodiment;
- Fig. 9: is a sectional view, showing a second embodiment, corresponding to Fig. 6; and
- Fig. 10: are illustrations, showing the second embodiment, corresponding to Fig. 8.

Now, embodiments will be described below.

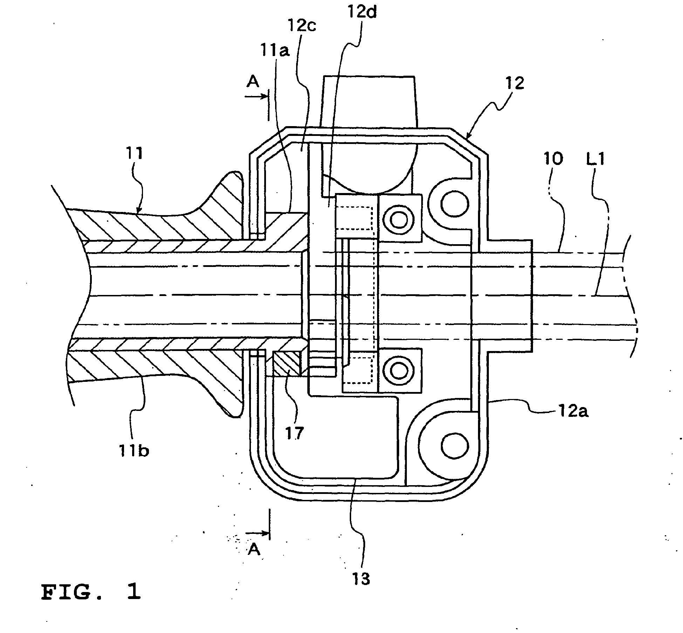

Fig. 1 to Fig. 8 show an example in which the (relative) position detection device according to the first embodiment is applied to an accelerator section of a motorcycle as an astride riding type vehicle.

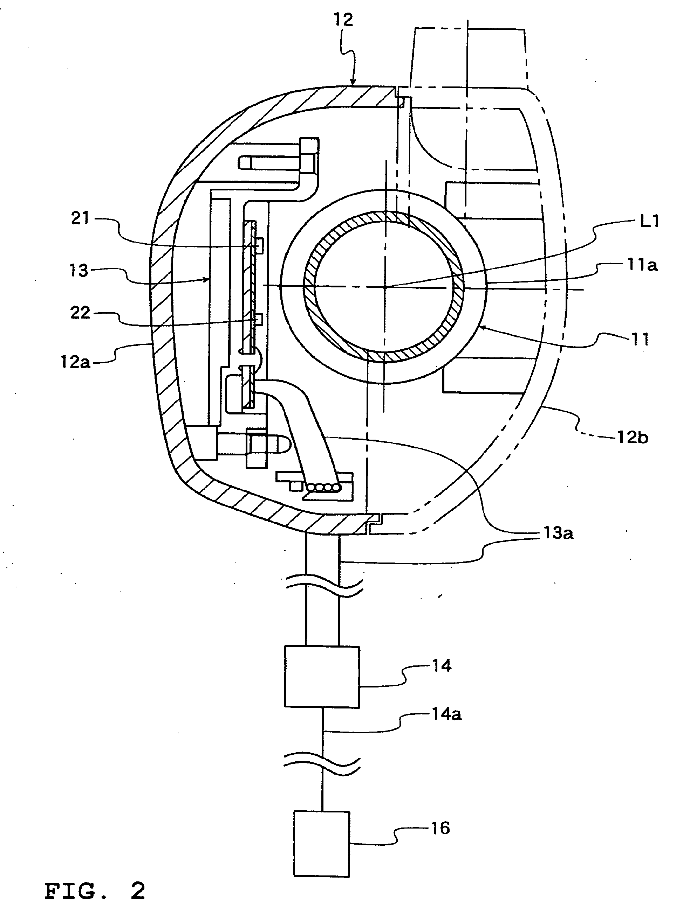

The relative position detection device has an accelerator grip (accelerator) 11 as a "first member" that is mounted for rotation on a handlebar 10 near one end thereof, and a housing 12 as a "second member" that is fixed to the handlebar 10 at a position corresponding to a tube guide section 11 a located at the end portion on the laterally central side of the accelerator 11, as shown in Fig. 1 and Fig. 2. The tube guide section 11 a of the accelerator 11 is contained in the housing 12 for rotation relative thereto (for relative movement).

Inside the housing 12, as shown in Fig. 2, a detection section 13 for detecting opening of the accelerator 11 is disposed opposite the tube guide section 11 a of the accelerator 11, wires 13a for the detection signal extending from the detection section 13 are connected to a control section 14 provided on a vehicle body (not shown), and further a wire 14a for the control signal extending from the control section 14 is connected to a controller 16 for operating a drive source.

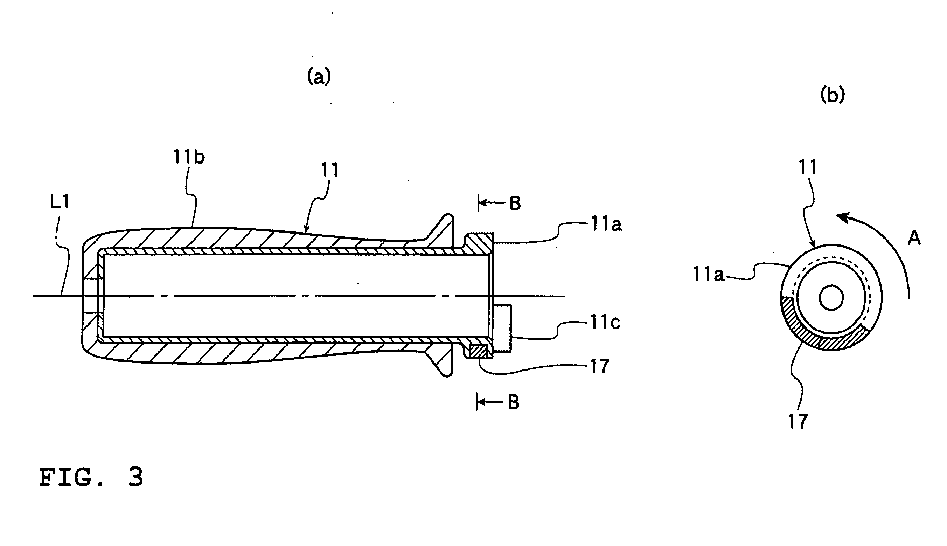

The accelerator 11 of the relative position detection device comprises the tube guide section 11 a disposed inside the housing 12 and a grip section 11 b disposed outside the housing 12, as shown in Fig. 3. The tube guide section 11 a has a rotation restriction section 11 c for restricting rotation of the accelerator 11, and a permanent magnet 17 assuming an arcuate shape with its arc center on a rotational axis L1 of the accelerator 11 and embedded in the tube guide section 11a of the accelerator 11.

On the other hand, the housing 12, as shown in Fig. 1 and Fig. 2, comprises a pair of split housings 12a, 12b for securely holding the handlebar 10 diametrically from both sides thereof, and the tube guide section 11 a of the accelerator 11 is disposed for rotation in an inside space defined by the split housings 12a, 12b.

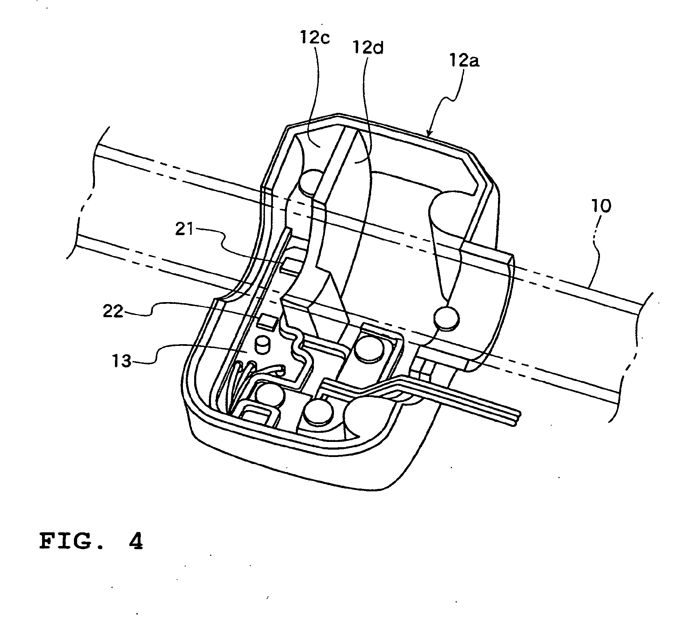

Inside one split housing 12a, as shown in Fig. 1 and Fig. 4, a container section 12c for containing the tube guide section 11 a of the accelerator 11 is defined by a rib-like projection piece 12d. The projection piece 12d is provided in a given positional relation with the rotation restriction section 11 c on the tube guide section 11 a of the accelerator 11 and arranged such that when it comes in abutment against the projection section 12d, the accelerator 11 is restricted of its rotation but rotatable between the completely-closed position θ0 and the fully-open position θm therethrough.

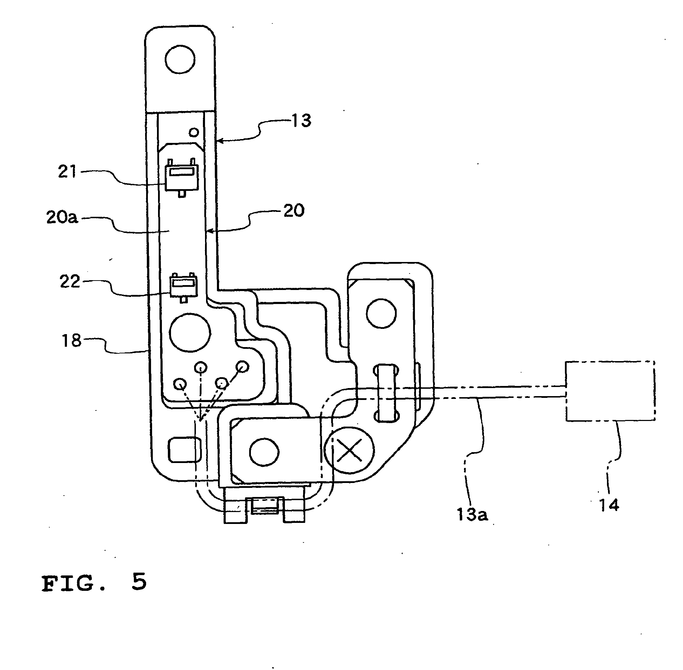

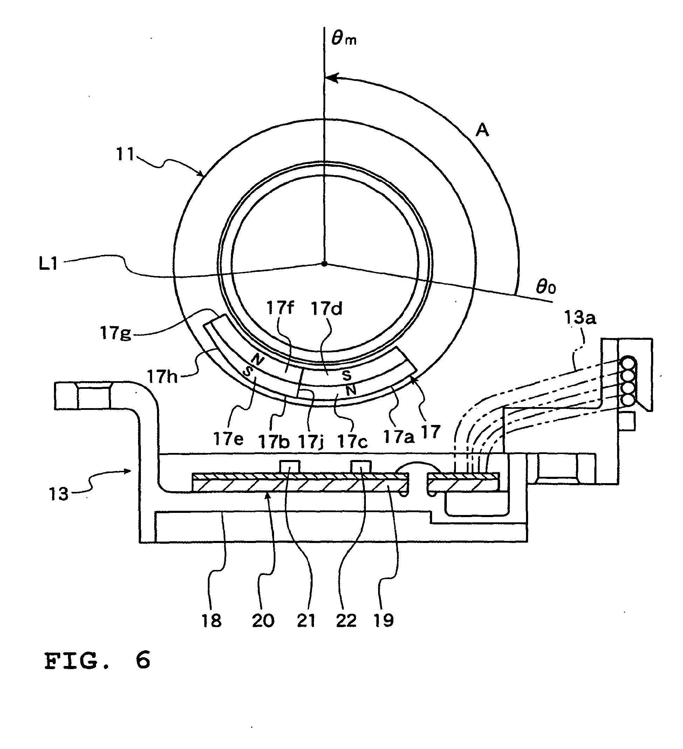

In the housing section 12c of the split housing 12a and in the vicinity thereof is fixed the detection section 13 for detecting the flux density of the magnetic field for detection formed by the permanent magnet 17 in the tube guide section 11 a of the accelerator 11. The detection section 13 is configured, as shown in Fig. 5 and Fig. 6, such that a flat plate-like circuit board 20 is supported on a circuit board holder 18 fixed to the split housing 12a, and in the circuit board 20 is embedded a magnetic metal plate 19 made of iron plate or the like. The circuit board itself may be made of iron, or an iron plate may be provided under the circuit board.

The circuit board 20 has a narrow section 20a to be disposed in the housing section 12c of the split housing 12a, as shown in Fig. 5, and on the narrow section 20a, a Hall IC 21 as a first Hall lC and a linear Hall IC 22 as a second Hall lC are mounted opposite to each other in a spaced relation from the permanent magnet 17.

The permanent magnet 17 in the tube guide section 11 a of the accelerator 11 is formed of two, a first and a second magnetic pole section 17a, 17b fixed adjacent to each other in the rotating direction of the accelerator 11. The first magnetic pole section 17a which is disposed forwardly in the direction "A" indicating the movement from the side of a completely-closed position θ0 toward the side of a fully-open position θm of the accelerator 11, has a first N-pole section 17c on the outer side and a first S-pole section 17d on the inner side, and the second magnetic pole section 17b disposed rearward in the direction "A", has a second S-pole section 17e on the outer side and a second N-pole section 17f on the inner side. Therefore, the permanent magnet 17 is configured such that the first N-pole section 17c and the second S-pole section 17e disposed on the outer sides of the first magnetic pole section 17a and the second magnetic pole section 17b in the direction "A" indicating the movement from the side of the completely-closed position θ0 toward the side of the fully-open position θm, are disposed side by side.

In addition, as shown in Fig. 6, the second S-pole section 17e has a slant face 17h formed such that its plate thickness is thinner toward the end face 17g.

On the other hand, the digital Hall IC 21 and the linear Hall IC 22, in the circuit board 20, are disposed in the direction perpendicular to the rotation axis L1 of the accelerator 11, that is, in the rotating direction of the accelerator 11 at a given distance away from each other.

Of these Hall ICs, the digital Hall IC 21 is at a position corresponding to a boundary section 17j between the first magnetic pole section 17a and the second magnetic pole section 17b in the circumferential direction of the permanent magnet 17 when the accelerator 11 is at a completely-closed position θ0, as shown in Fig. 6. More specifically, the accelerator 11 has a play around the completely-closed position θ0 and the digital Hall lC 21 is at a position corresponding to that in the vicinity of the boundary section 17j and a little toward the first N-pole section 17c.

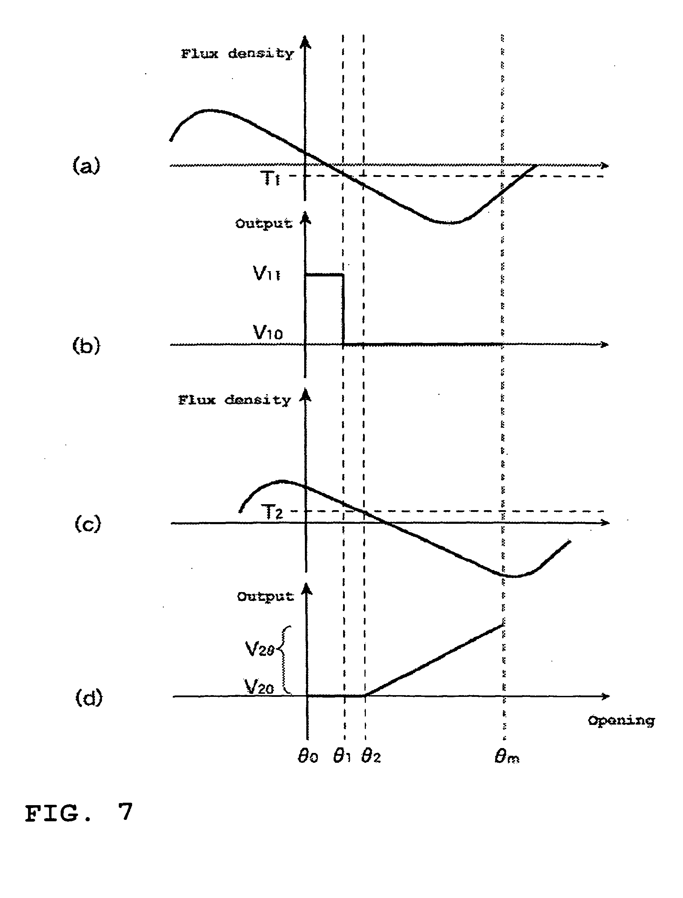

When the accelerator 11 is rotated from the completely-closed position θ0 to the fully-open position θm, the flux density the digital Hall IC 21 receives, changes as shown in Fig. 7(a). This digital Hall IC 21 is arranged so as to receive magnetic force from the permanent magnet 17 at all times throughout the range in which the accelerator 11 and the housing 12 displace relative to each other.

Further, regarding a first detection signal from the digital Hall IC 21, a voltage V11 is outputted when the flux density at the position is not smaller than a given threshold T1, and a voltage V10 is outputted when the flux density is smaller than the given threshold T1. Here, the voltage V10 is zero volt.

In the present embodiment, the digital Hall lC 21 is located at a position to receive magnetic force from the permanent magnet 17 at all times between the completely-closed position θ0 and the fully-open position θm therethrough, and it will receive the magnetic flux as shown in Fig. 7(a).

The linear Hall IC 22 is disposed as shown in Fig. 6 such that it is at a position facing the first N-pole section 17c of the permanent magnet 17 when the accelerator 11 is at the completely-closed position θ0, and it makes a relative movement to a position facing the second S-pole section 17e (slant face 17h) of the permanent magnet 17 when the accelerator 11 is rotated to the fully-open position θm.

When the accelerator 11 is rotated from the completely-closed position θ0 to the fully-open position θm, the flux density the linear Hall lC 22 receives, is set so as to change monotonously from the side of the first N-pole section 17c to the side of the second S-pole section 17e, as shown in Fig. 7(c).

The range of the monotonous change of the flux density is a range from the completely-closed position θ0 to the fully-open position θm, or a range in which the flux density detected when the accelerator 11 displaces from the fully-open position θm to the completely-closed position θ0, increases or decreases without passing the position of an extreme value, and here, it is a range in which the flux density decreases monotonously.

Further, regarding a second detection signal from the linear Hall IC 22, a voltage V20 is outputted when the flux density at the position is not smaller than a given threshold T2 and a voltage V2θ corresponding to the flux density is outputted in inversely proportional to the flux density when the flux density is smaller than the given threshold T2. Here, the voltage V20 is zero volt.

The control section 14 to which is inputted these outputs of the digital Hall IC 21 and the linear Hall IC 22, is arranged such that when the output from the digital Hall IC 21 changes from V11 to V10, it outputs to the controller 16 a control signal to stop power supply to the motor as a drive source, and when the output from the digital Hall IC 21 is not V11 but V10, it outputs to the controller 16 a control signal corresponding to the output of the linear Hall IC 22, enabling power supply to the motor to be changed to correspond to the output of the linear Hall IC 22.

Now, an example in which a drive motor is operated by the accelerator 11 through the controller 16, will be described in a motorcycle equipped with a relative position detection device having the construction described above.

Firstly, since between the completely-closed position θ0 and a given opening θ1, the flux density at the position of the digital Hall lC 21 is not smaller than a threshold T1, as shown in Fig. 7(a), a first detection signal V11 indicative of the completely-closed position θ0 is outputted from the digital Hall lC 21, as shown in Fig. 7(b). At this time, since the flux density at the position of the linear Hall lC 22 is not smaller than a threshold T2, as shown in Fig. 7(c), a second detection signal V20 corresponding to the completely-closed position θ0 is outputted from the linear Hall IC 22, as shown in Fig. 7(d). These outputs from the digital Hall IC 21 and the linear Hall IC 22 are transmitted to the control section 14 through the wires 13a for the detection signal, and a control signal to stop power supply to the motor is transmitted to the controller 16 from the control section 14 through the wire 14a for the control signal.

When the accelerator 11 is rotated from the position a little in the direction "A" to make the opening larger than a given opening θ1, the flux density at the position of the digital Hall IC 21 becomes larger than a given threshold T1 and the first detection signal V10 is outputted. At this time, since in this embodiment, the flux density at the position of the linear Hall lC 22 is larger than a given threshold T2, a condition is maintained in which the second detection signal V20 is outputted from the linear Hall lC 22. Therefore, a control signal to stop power supply to the motor is outputted from the control section 14.

Then, since when the accelerator 11 is rotated further in the direction "A" to make the opening larger than a given opening θ2, the magnetic flux at the position of the linear Hall IC 22 becomes smaller than T2, the condition is maintained in which the first detection signal V10 is outputted from the digital Hall IC 21, while a second detection signal V2θ corresponding to change in the flux density is outputted from the linear Hall IC 22 and transmitted to the control section 14 through the wires 13a for the detection signal. Therefore, a control signal corresponding to the second detection signal V26 is outputted to the controller 16 and the motor is controlled in response to the second detection signal V2θ.

Further, since when the accelerator 11 is set to a fully-open position θm, the flux density at the position of the digital Hall IC21 is smaller than a given threshold T1, the condition is maintained in which the first detection signal V10 is outputted, and the motor is set to a fully-open position θm in response to the second detection signal V2θ from the linear Hall IC 22.

On the other hand, when the accelerator 11 is rotated opposite to the direction "A," the accelerator opening in a range larger than the opening θ2 is operated to correspond to the second detection signal V2θ from the linear Hall IC 22 and in an opening range smaller than the opening θ2, power supply to the motor is shut down.

According to the motorcycle using the relative position detection device as described above, in the condition in which the first detection signal V11 indicative of the completely-closed position θ0 is outputted from the digital Hall IC 21, a control signal corresponding to the completely-closed position θ0 can be outputted from the control section 14 and in the condition in which the first detection signal V10 indicative of the opening state of the accelerator 11 is outputted from the digital Hall lC 21, a control signal corresponding to the second detection signal V2θ from the linear Hall lC 22 can be outputted from the control section 14. Therefore, in the condition in which the accelerator 11 is disposed at a completely-closed position θ0 with respect to the housing 12, if the first detection signal V10 indicative of the opening state of the accelerator 11 is outputted instead of the first detection signal V11 indicative of the completely-closed position θ0 being outputted from the digital Hall lC 21 as a result of malfunction or the like, the second detection signal V20 indicative of the completely-closed position θ0 has been outputted from the linear Hall lC 22, so that a control signal corresponding to the completely-closed state in which power supply is stopped, is outputted from the control section 14.

Even when the second detection signal V2θ indicative of the opening state of the accelerator 11 is outputted from the linear Hall IC 22 as a result of malfunction or the like, a first detection signal V11 indicative of the completely-closed position θ0 has been outputted from the digital Hall IC 21, so that a control signal corresponding to the completely-closed state in which power supply is stopped, is outputted from the control section 14.

As a result, since a control signal for the control to the completely-closed state in which power supply is stopped, is outputted from the control section 14 in spite of malfunctions in the Hall lcs 21, 22, safety can be secured.

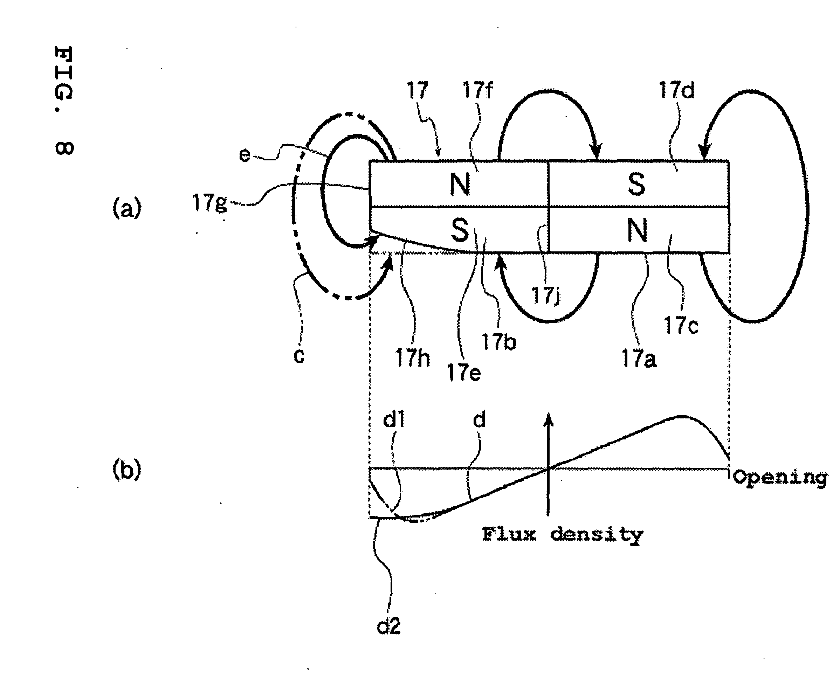

In addition, the second S-pole section 17e is formed with a slant face 17h in this embodiment, the detection range (between the completely-closed position θ0 to the fully-open position θm) can be set longer. That is, if there is no slant face 17h and the second S-pole section has a rectangular shape as shown in Fig. 8 by a double dot and dash line, large magnetic force is produced at the side of the end face 17g as shown in Fig. 8(a), so that the flux density line "d" changes abruptly at the side of its end portion "d1" as shown in (b) by a double dot and dash line. Therefore, no proper relative position is detected if the flux density is measured at the end portion "d1" around which the flux density line "d" changes abruptly.

On the contrary, if the second S-pole section 17e is formed with a slant face 17h, the line e of small magnetic line "e" is produced at the side of the end face 17g as shown in Fig. 8(a), so that the flux density line "d" changes smoothly at the side of the end portion "d2" as shown in fig. 8(b) by a solid line. Therefore, since the flux density line d becomes smoother at the end portion "d2", the detection range can be extended effectively without need of increasing the total length of the permanent magnet 17.

Further, the digital Hall lC 21 by which the fact is detected of whether or not the accelerator 11 is at a completely-closed position θ0, is disposed at a position so as to receive magnetic force at all times from the permanent magnet 17 in the entire range in which the accelerator 11 and the housing 12 displace relative to each other, that is, in the entire rotating range of the accelerator 11 (from the completely-closed position θ0 to the fully-open position θm therethrough), it is hardly subjected to the influence of magnetic force from the outside and no malfunction occurs easily.

That is, since the digital Hall IC 21 is a Hall lC for detecting whether or not the accelerator is at a completely-closed position θ0, essentially, it may be satisfactory if the digital Hall lC receives magnetic force only at this position. However, if magnetic force is applied to the digital Hall lC 21 from the outside at a position other than the completely-closed one, the magnetic force might lead to misdetection in which the accelerator is erroneously considered to be at a completely-closed position θ0.

Therefore, since in the present embodiment, the digital Hall lC 21 is adapted to receive magnetic force at all times from the permanent magnet 17 even when the accelerator is at a position other than the completely-closed one, if external magnetic force is applied, its influence is small and the digital Hall IC becomes stronger against the external magnetic force, suppressing the occurrence of malfunction.

In addition, if the permanent magnet 17 is fixed to the accelerator 11, and the digital Hall lC 21 and the linear Hall lC 22 are fixed, in a non-contact relation with the permanent magnet 17, in the magnetic field for the detection of the permanent magnet 17 in the housing 12 fixed to the handlebar 10, then independent two detection signals can be obtained. A control signal can be outputted from the control section 14 through these detection signals, so that no potentiometer or the like used in a conventional system is required and a relative position detection device capable of easily preventing malfunction of a drive source can be constructed compactly at a low cost, enabling its easy installation around the accelerator grip.

Further, compared with when a potentiometer is used as in a conventional system, no member such as a potentiometer having a shape larger than that of the accelerator 11 is required and wires or the like connecting the accelerator 11 and the potentiometer are unnecessary, so that the quality of external appearance can be improved easily, the number of parts and man-hours for assembling can be kept small and because of fewer mechanical parts, no consideration for deterioration over time is necessary.

Moreover, since the first N-pole section 17c and the second S-pole section 17e of the permanent magnet 17 are disposed side by side in the direction "A" in which the accelerator 11 is rotated with respect to the housing 12, change of the direction of the magnetic line becomes large near the boundary section 17j between the first N-pole section 17c and the second S-pole section 17e, and therefore the position can be detected easily as a completely-closed one by the digital Hall lC 21.

Further, since a magnetic metal plate 19 disposed separate from and facing the permanent magnet 17, is embedded in the circuit board 20, and the digital Hall IC 21 and the linear Hall IC 22 are disposed between the metal plate 19 and the permanent magnet 17, the flux of the magnetic field for detection formed by the permanent magnet 17 can be collected toward the metal plate 19 and the flux density can be detected easily by the digital Hall IC 21 and the linear Hall IC 22 compared with when the metal plate 19 is not provided.

At the same time, since the digital Hall lC 21 and the linear Hall lC 22 are disposed between the metal plate 19 and the permanent magnet 17, the magnetic flux from the outside is shut off by the metal plate 19 and scarcely reaches the digital Hall IC 21 and the linear Hall IC 22, and the occurrence of malfunction can be suppressed.

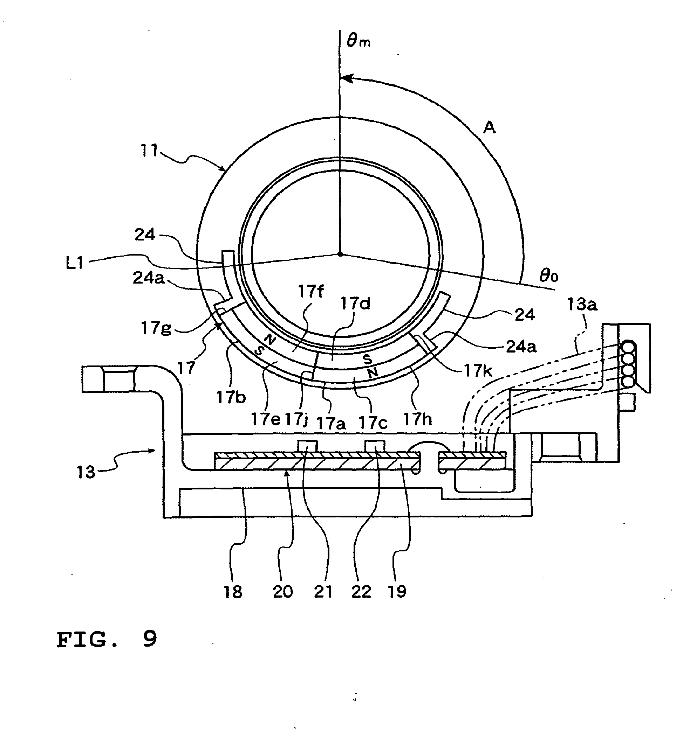

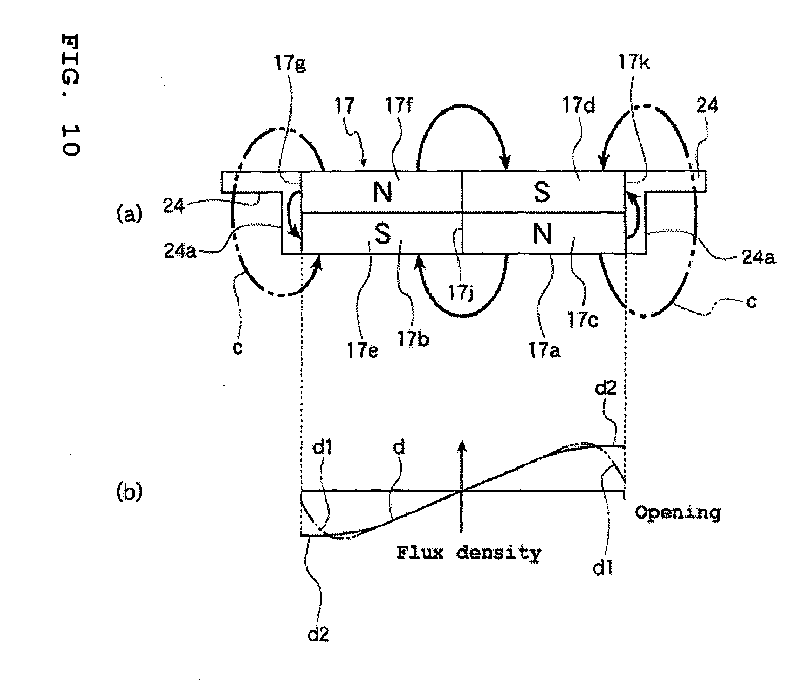

A second embodiment is shown in Fig. 9 and Fig. 10.

In the second embodiment, in place of the slant face 17h in the first embodiment, an iron plate 24 as a magnetic substance is provided at each end face 17g, 17k of the permanent magnet 17.

The iron plate 24 has a cross-section formed in the shape of approximately a letter L, and configured such that a connecting face section 24a is in abutment against each end face 17g, 17k of the permanent magnet 17 and at the side of the first magnetic pole section 17a, the first N-pole section 17c and the first S-pole section 17d are short-circuited by the connecting face section 24a of one iron plate 24, while at the side of the second magnetic pole section 17b, the second S-pole section 17e and the second N-pole section 17f are short-circuited by the connecting force section 24a of the other iron plate 24. Therefore, no large magnetic line "c" shown in Fig. 10(a) by a double dot and dash line is produced.

Since in such an arrangement as described above, as shown in Fig. 10, in each end face 17g, 17k of the permanent magnet 17, magnetic force passes mainly through the iron plate 24 between the first N-pole section 17c and the first S-pole section 17d or between the second S-pole section 17e and the second N-pole section 17f, as shown in Fig. 10(a), the flux density line "d" changes smoothly at the side of the end portion "d2", as shown in Fig. 10(b) by a solid line. Therefore, since the end portion "d2" of the flux density line "d" becomes smoother, the detection range can be extended effectively without need of increasing the total length of the permanent magnet 17.

Although in this embodiment, description has been made on the astride riding type vehicle carrying a relative position detection device, the teaching of the present embodiment is not limited to that, and may be applied to other systems if they are adapted to detect the relative position. Of course, an engine may be used as a drive source.

Within the description above, there is disclosed (amongst others) an embodiment of a relative position detection device having a first member and a second member which are capable of relative displacement to each other, the first member comprising a magnet, and the second member comprising, in a range in which the flux density of a magnetic field of the magnet changes monotonously, a Hall lC for detecting change in the flux density, characterized in that: the magnet has a slant face formed in such a manner that the plate thickness of the magnet becomes thinner toward its end face in the direction of the relative displacement.

Accordingly, since the magnet has a slant face formed such that the plate thickness of the magnet becomes thinner toward its end face in the direction of relative displacement, change in the flux density at the end face can be smoothed down, so that the detection range can be extended effectively without need of increasing the length of the magnet.

Further, if a magnet is fixed to one of the first and the second member capable of relative displacement to each other and a Hall IC is fixed in the same magnetic field for detection formed by the magnet in a non-contact relation with the magnet, then a detection signal can be obtained, so that no potentiometer or the like used in a conventional system is required and a relative position detection device capable of easily preventing the foregoing malfunction, can be constructed compactly at a low cost.

Further, within the description above, there is disclosed an embodiment of the relative position detection device having a first member and a second member which are capable of relative displacement to each other, the first member comprising a magnet and the second member comprising, in a range in which the flux density of a magnetic field of the magnet changes monotonously, a Hall IC for detecting change in the flux density, characterized in that the magnet has a magnetic substance disposed at the end face in the direction of the relative displacement.

Accordingly, since the magnet has a magnetic substance disposed at the end in the direction of relative displacement, change in the flux density at the end face can be smoothed down, so that the detection range can be extended effectively without need of increasing the length of the magnet.

In addition to the embodiments as set forth above, there might be comprised a magnet metal plate that is disposed opposite and separate from the magnet, wherein the Hall lC is disposed between the metal plate and the magnet.

Accordingly, a magnetic metal plate is disposed separate from and opposite the magnet, and the Hall IC is disposed between the metal plate and the magnet. Therefore, the flux of the magnetic field for detection formed by the magnet can be collected toward the metal plate, so that the magnetic flux can be detected easily by the first Hall IC compared with when there is provided no metal plate. At the same time, since the first Hall IC is disposed between the metal plate and the magnet, the magnetic flux from the outside is shut off by the metal plate and scarcely reaches the first Hall lC, preventing malfunction or the like easily.

The description above still further discloses an embodiment of an astride riding type vehicle having the (relative) position detection device, as set forth above, mounted thereon for the control of accelerator opening; wherein one of the magnet and the Hall IC is fixed to a handlebar and the other to an accelerator grip mounted to the handlebar for rotation; and a rotational position of the handle grip with respect to the handlebar is detected by the relative position detection device.

Accordingly, since the magnet and the Hall lC are fixed to the handlebar and the accelerator, respectively, and the accelerator can be controlled by detecting the position of the accelerator grip, no potentiometer or the like used in a conventional system is required, enabling a compact arrangement, and a relative position detection device can also be provided around the accelerator grip. Further, no wires or the like for connecting the accelerator grip and the potentiometer are needed, so that the quality of external appearance can be improved easily and the number of parts and man-hours for assembling can be kept small.

In particular, the description above discloses, in order to provide a relative position detection device capable of detecting change of the relative position more effectively over a longer range and of being constructed compact and at a low cost, a relative position detection device having an accelerator 11 and a housing 12 which are capable of relative displacement to each other, the accelerator 11 comprising a permanent magnet 17, and the housing 12 comprising, in a range in which the flux density of a magnetic field of the permanent magnet 17 changes monotonously, a linear Hall IC 22 for outputting change of the flux density, wherein the permanent magnet 17 has a first N-pole section 17c and a second S-pole section 17e disposed side by side in the direction of relative displacement, and the second S-pole section 17e is formed with a slant face 17h such that the plate thickness of the magnet becomes thinner toward the end face 17g.

## Claims

1. Position detection device for an accelerator grip of an astride riding type vehicle having a first member (11) and a second member (12), which are displaceable relative to each other, the first member (11) comprising a magnet (17), and the second member (12) comprising, in a range of a magnetic field of the magnet (17), a first Hall effect sensor (21) for detecting a change in a property of the magnetic field,
**characterized in that**
a plate thickness of the magnet (17) at its end face in a direction of a relative displacement of the first and second members (11,12) is reduced.

2. Position detection device according to claim 1, **characterized in that** the magnet (17) at its end face in the direction of the relative displacement has a slant face (17h) formed in such a manner that the plate thickness of the magnet (17) becomes thinner toward it.

3. Position detection device having a first member (11) and a second member (12), which are displaceable relative to each other, the first member (11) comprising a magnet (17), and the second member (12) comprising, in a range of a magnetic field of the magnet (17), a first Hall effect sensor (21) for detecting a change in a property of the magnetic field, **characterized in that** a magnetic substance (24) is disposed at at least one of the end faces of the magnet in a direction of the relative displacement of the first and second members (11,12).

4. Position detection device according to one of the claims 1 to 3, **characterized in that** a second Hall effect sensor (22) is configured to detect a change in a flux density, and the second Hall effect sensor (22) is provided on the second member (12) in a range, in which the flux density of the magnetic field of the magnet (17) changes monotonously.

5. Position detection device according to one of the claim 1 to 4, **characterized by** a magnetic metal plate (19) disposed opposite and separate from the magnet (17), wherein the first Hall effect sensor (21) is disposed between the metal plate (19) and the magnet (17).

6. Astride riding type vehicle having the position detection device according to one of the claims 1 to 5, mounted thereon for the control of accelerator opening, wherein one of the magnet (17) and the first Hall effect sensor (21) is fixed to a handlebar (10) and the other is fixed to an accelerator grip (11) mounted to the handlebar (10) for rotation; and a rotational position of the accelerator grip (11) with respect to the handlebar (10) is detected by the position detection device.

## Patentansprüche

1. Positionserfassungsvorrichtung für einen Beschleunigergriff eines Fahrzeuges vom Aufsitz- Typ mit einem ersten Teil (11) und einem zweiten Teil (12), die relativ zueinander verlagerbar sind, wobei das erste Teil (11) einen Magnet (17) aufweist und das zweite Teil (12), in einem Bereich eines Magnetfeldes des Magneten (17) einen ersten Halleffekt- Sensor (21) zum Erfassen einer Veränderung in einer Eigenschaft des Magnetfeldes aufweist,
**dadurch gekennzeichnet, dass**
eine Plattendicke des Magneten (17) an seiner Endfläche in einer Richtung einer relativen Verlagerung des ersten und zweiten Teiles (11, 12) gegeneinander reduziert ist.

2. Positionserfassungsvorrichtung nach Anspruch 1, **dadurch gekennzeichnet, dass** der Magnet (17) an seiner Endfläche in der Richtung der relativen Verlagerung eine verjüngte Fläche (17h), gebildet in solch einer Weise hat, dass die Plattendicke des Magneten (17) in dieser Richtung dünner wird.

3. Positionserfassungsvorrichtung mit einem ersten Teil (11) und einem zweiten Teil (12), die relativ zueinander verlagerbar sind, wobei das erste Teil (11) einen Magnet (17) aufweist und das zweite Teil (12), in einem Bereich eines Magnetfeldes des Magneten (17) einen ersten Halleffekt- Sensor (21) zum Erfassen einer Veränderung in einer Eigenschaft des Magnetfeldes aufweist,
**dadurch gekennzeichnet, dass** eine magnetische Substanz (24) an zumindest einer von den Endflächen des Magnetes angeordnet ist, in einer Richtung der relativen Verlagerung des ersten und des zweiten Teiles (11, 12).

4. Positionserfassungsvorrichtung nach einem der Ansprüche 1 bis 3, **dadurch gekennzeichnet, dass** ein zweiter Halleffekt- Sensor (22) konfiguriert ist, um eine Veränderung in einer Flußdichte zu erfassen, und der zweite Halleffekt- Sensor (22) an dem zweiten Teil (12) in einem Bereich vorgesehen ist, in dem sich die Flußdichte des Magnetfeldes des Magneten monoton ändert.

5. Positionserfassungsvorrichtung nach einem der Ansprüche 1 bis 4, **gekennzeichnet durch** eine magnetische Metallplatte (19), angeordnet gegenüberliegend und separate von dem Magnet (17), wobei der erste Halleffekt- Sensor (21) zwischen der Metallplatte (19) und dem Magnet (17) angeordnet ist.

6. Fahrzeug vom Aufsitz- Typ mit der Positionserfassungsvorrichtung nach einem der Ansprüche 1 bis 5, daran montiert für die Steuerung der Beschleunigeröffnung, wobei einer von Magnet (17) oder erstem Halleffekt- Sensor (21) an einer Lenkstange (10) befestigt ist und der andere an einem Beschleunigergriff (11), montiert an der Lenkstange (10) für eine Drehung, befestigt ist; und wobei eine Drehposition des Beschleunigergriffs (11) in Bezug auf die Lenkstange (10) durch die Positionserfassungsvorrichtung erfasst wird.

## Revendications

1. Détecteur de position pour une poignée d'accélérateur d'un véhicule de type à chevauchement à califourchon, comprenant un premier organe (11) et un deuxième organe (12), déplaçables l'un par rapport à l'autre, le premier organe (11) comprenant un aimant (17), et le deuxième organe (12) comprenant, dans une plage d'un champ magnétique de l'aimant (17), un premier capteur à effet Hall (21) pour détecter un changement d'une propriété du champ magnétique,
**caractérisé en ce qu'**
une épaisseur de plaque de l'aimant (17), à sa face d'extrémité, dans une direction d'un déplacement relatif des premier et deuxième organes (11, 12) est réduite.

2. Détecteur de position selon la revendication 1, **caractérisé en ce que** l'aimant (17), à sa face d'extrémité, dans la direction du déplacement relatif, présente une face inclinée (17h), formée de manière que l'épaisseur de plaque de l'aimant (17) devienne moindre en évoluant vers elle.

3. Détecteur de position comprenant un premier organe (11) et un deuxième organe (12), déplaçables l'un par rapport à l'autre, le premier organe (11) comprenant un aimant (17), et le deuxième organe (12) comprenant, dans une plage d'un champ magnétique de l'aimant (17), un premier capteur à effet Hall (21) pour détecter un changement d'une propriété du champ magnétique, **caractérisé en ce qu'**une substance magnétique (24) est disposé en au moins l'une des faces d'extrémité de l'aimant, dans une direction de déplacement relatif des premier et deuxième organes (11, 12).

4. Détecteur de position selon l'une des revendications 1 à 3, **caractérisé en ce qu'**un deuxième capteur à effet Hall (22) est configuré pour détecter un changement d'une densité de flux, et le deuxième capteur à effet Hall (22) est prévu sur le deuxième organe (12), dans une plage dans laquelle la densité de flux du champ magnétique de l'aimant (17) varie de façon monotone.

5. Détecteur de position selon l'une des revendications 1 à 4, **caractérisé par** une plaque métallique (19) magnétique, disposée à l'opposé et séparément de l'aimant (17), dans lequel le premier capteur à effet Hall (21) est disposé entre la plaque métallique (19) et l'amant (17).

6. Véhicule de type à chevauchement à califourchon, muni du détecteur de position selon l'une des revendications 1 à 5, monté sur lui pour le contrôle de l'ouverture d'accélérateur, dans lequel l'un, de l'aimant (17) et du premier capteur à effet Hall (21), est fixé à un guidon (10) et l'autre est fixé à une poignée d'accélérateur (11) montée à rotation sur le guidon (10) ; et une position en rotation de la poignée d'accélérateur (11) par rapport au guidon (10) est détectée par le détecteur de position.
